# EUROPEAN PATENT APPLICATION

(11) **EP 4 697 284 A1**
(43) Date of publication of application: **18.02.2026**
(21) Application number: 24194516.1
(22) Date of filing: 14.08.2024
(51) Int. Cl.: G06V 10/774, G06V 10/82, G06V 20/58

(54) **DETECTING ROAD HAZARDS AND THEIR POTENTIAL IMPACT ON VEHICLE AND/OR TIRES**

(71) Applicant: Bridgestone Europe NV/SA, 1930 Zaventem (BE)
(72) Inventor: BENEDETTI, Roberto, 00128 Roma (IT); BORTOLOTTO, Valerio, 00128 Roma (IT); ALLEVA, Lorenzo, 00128 Roma (IT); PASCUCCI, Marco, 00128 Roma (IT)
(74) Representative: Bardehle Pagenberg Partnerschaft mbB Patentanwälte Rechtsanwälte

(57) **Abstract**

A computer-implemented method for providing training data for training a neural network for road analysis comprises: obtaining initial telematic data associated with a drive of a vehicle on a surface; obtaining initial image data of the surface, wherein obtaining the initial image data is associated with the drive of the vehicle; and selecting at least a portion of the initial image data as the training data, based at least partly on the initial telematic data.

## Description

### 1. Field of the disclosure

The present disclosure relates, inter alia, to computer-implemented methods for providing training data for training a neural network for road analysis, computer-implemented methods for training a neural network for use in road analysis, neural networks for use in road analysis, computer-implemented methods for road analysis, and corresponding systems and computer programs.

### 2. Technical background

Presently, road analysis, particularly road health monitoring, is a crucial task to ensure safety and efficiency to the whole infrastructure. In view of the high rates of road transportations all over the world, the quality of the road infrastructure may be seen as an essential element for the wellness of society.

One of the most dangerous road hazards associated with the decaying of the road quality are potholes. Potholes not only diminish the quality of road surfaces but also pose safety hazards for motorists, cyclists, and pedestrians. Potholes also represents a serious danger for tire integrity, leading to potential failures of the carcass leading to highest risk of accidents.

Addressing these road hazards in a timely manner is crucial to ensure the safety and efficiency of transportation networks. Keeping operative such infrastructure is a challenging task for local authorities where scheduling maintenance activities is an expensive task that requires continuous monitoring with dedicated personal and instruments leading to high costs and long response time.

One approach to tackle this problem is through the implementation of automated street monitoring systems. These involves the continuous surveillance and assessment of road conditions using various technological tools and methods like sensors, cameras, and data analysis algorithms to detect and analyze signs of road hazards, e.g., comprising road degradation, including the formation of potholes. By continuously monitoring the condition of streets, authorities may identify and prioritize areas in need of repair, facilitating more proactive and efficient maintenance strategies and significantly improving the detection time.

Knowing the conditions of the road infrastructure can also play a significant role for improving navigation systems. Users might decide routing also by road quality, by preferring higher quality roads to improve safety and comfort.

Recent approaches, however, cannot achieve sufficiently accurate and complete analyses of the state of a road, in particular regarding potential road hazards like potholes. This, however, is required for efficient workflows in various aspects: For examples, a false-positive detection of a road hazard may lead to repair staff unnecessarily traveling to the falsely detected road hazard which may delay the repair of actual road hazards. A non-detected road hazard, however, may continuously pose a danger in traffic upon not being repaired. Further, e.g., drivers of vehicles cannot be warned about said undetected road hazard. This may increase the frequency of accidents, result in high costs and an inefficiently maintained road infrastructure.

Thus, there is therefore a need to further improve methods, computer programs, means, systems and related aspects for road analysis.

### 3. Summary

The aspects of the present disclosure meet the above need at least in part.

A first aspect of the present disclosure relates to a computer-implemented method for providing training data for training a neural network for road analysis. The method comprises: obtaining initial telematic data associated with a driving of a vehicle on a surface; obtaining initial image data of the surface, wherein obtaining the initial image data is associated with the driving of the vehicle; and selecting at least a portion of the initial image data as the training data, based at least partly on the initial telematic data. Likely, obtaining both, initial telematic data and initial image data, can significantly increase the efficiency of providing the training data. In detail, the telematic data may comprise clear, reliable, and easy-to-identify indicators for events of a collision with a road hazard. Such collision may, e.g., automatically and/or easily be determined by analyzing variations in the initial telematic data: For example, based on the variation of the wheel speed that follows a certain pattern, and/or acceleration data, and/or GPS position and/or other telematic data, one may easily, efficiently, and quickly be able to determine when and/or where the vehicle collided with a road hazard. This provides an optimal basis for selecting only those initial image data (e.g., temporally) associated with said initial telematic data that indicate said collision as training data. This may significantly save time and costs and may further yield a higher quality of training data.

In result, also a neural network for use in road analysis, having been trained based on such training data is expected to be more accurate and reliable. In detail, the training data as per the method for providing them described herein may weight those road hazards with an increased probability for colliding with them more heavily which are exactly those road hazards that the trained neural network must identify for a particularly reliable, accurate, and helpful operation:
First, conventional training data may be based on image data (or other data) that cannot give a particular weight to the fact how relevant said road hazards are for vehicles driving on said (road) surfaces. Rather, they may attribute an equal weight to all road hazards in the image data. This may lead to a suboptimal training, e.g., for the following reasons: Typically, when a road hazard is particularly dangerous and thus relevant for the trained model to detect it, authorities may likely quickly repair such road hazards while less relevant road hazards may not be repaired for a long time as this is deemed not urgent. Thus, there may be more road hazards on the roads, and thus in the image data, that are less relevant for the road analysis described herein. Precisely those likely less relevant or even irrelevant road hazards may be over-represented in the image data and thus the training data. In result, these (conventional) image data/training data may rather yield a trained neural network that is optimized to detecting less relevant rad hazards. The inventors of the present disclosure thus found a reliable, yet efficient, way to attribute the required weight to more relevant road hazards, i.e., those that vehicles may likely collide with such that said collision is represented in telematic data of the vehicle.

Second, the weighting and/or the integration of the image data into the training (e.g., by selecting them as training data, labelling them, etc.) based on the telematic data may be facilitated (e.g., by automizing the selecting as described herein and/or reducing the required amount of work) and improved (e.g., by reducing the risk of selecting irrelevant training data that might prolong the training without adding a substantial improvement to the trained neural network).

Third, this automized process may also allow identification of those road hazards to be integrated into the training data that might be overseen in other conventional approaches for selecting training data. E.g., when selecting and labeling initial image data manually (as well in other approaches), one may oversee minor road hazards (e.g., rough and/or dirty road surfaces). The resulting training data set may thus be only of lower quality, and neural networks trained thereon may not be capable of detecting corresponding minor road hazards.

The obtaining of the initial telematic data and/or the initial image data may, e.g., comprise an acquiring, measuring, and/or receiving (e.g., from a database storing said initial telematic data and/or the initial image data). In one exemplary workflow, a vehicle (e.g., comprising, equipped with, and/or coupled to a camera configured to acquire, measure, and/or provide the initial image data of the road and/or comprising, equipped with, and/or coupled with a positioning system (e.g. GPS)) may be driven on the surface. E.g., the vehicle may (with or without intent) drive along one or more road hazards and/or portions of the drive without any road hazard. The vehicle may, e.g., by means of at least one tire, its vehicle underbody, and/or at least a part of its body, collide with at least one of the road hazards during the drive. During said drive, the initial telematic data and/or the initial image data may be acquired. These may either be processed directly as per the method described herein and/or stored in a database (e.g., for further, later processing according to the method described herein). Thereby, e.g., by timestamping the initial telematic data and the initial image data, it may be possible to link the initial telematic data and the initial image data.

The method may, in some examples, be executed by any suitable means, e.g., a computer, an (optionally cloud-based) server, a processor, similar means, and/or any combination thereof. These may be mounted to the vehicle and/or remote thereto. Said means executing the method described herein may, e.g., obtain the initial telematic data and/or the initial image data by receiving them from the database storing them, e.g., after an acquisition as described herein.

The image data may be, e.g., acquired, measured, and/or provided by any suitable image capturing means. In some embodiments, this means may be (but is not necessarily) mounted to the vehicle: e.g., by means of front-, side, and/or rear-camera(s) and/or a mobile phone and/or camera mounted to the exterior and/or interior of the vehicle, e.g., by means of a holder in the driver's cabin and facing the windscreen in the front/driving direction to capture images of the surface the vehicle may be driving on. In some examples, one may additionally or alternatively use any image capturing means like, e.g., external road cameras, drones and/or similar means. Features described herein in reference to "image data" may relate to the "initial image data" and/or to the "in-operando image data".

In some examples, the initial image data may comprise a plurality of image frames. Preferably, the training data (e.g., the selected image data, e.g., referred to as training image data) may comprise at least one frame of the plurality of image frames.

This may provide a sufficiently large database which may result in an increased quality of the provided training data.

The plurality of image frames may be comprised of a video, a portion thereof, and/or separate pictures that do not form a video. The selected frames may pose the so-called training image data.

In some examples, the method may further comprise determining a collision with a road hazard based at least partly on the initial telematic data, wherein the road hazard may comprise a deviation from a plane road surface. For example, the selecting may be based at least partly on the determining of the collision.

Advantageously, this may provide an optimal basis for selecting only those initial image data (e.g., temporally) associated with said initial telematic data that indicate said collision as training data. Thereby, precisely the most critical road damages (i.e., those a vehicle likely collides with) are ensured to be comprised in the training data. This may increase the quality of the following training process, the trained neural network, and/or operation of said neural network.

The deviation from the plane road surface may, e.g., be defined as follows: A plane surface may, e.g., comprise a surface with a curvature in a predetermined range and/or within a predetermined roughness range. E.g., a pothole locally comprises a substantially higher curvature than a regular (plane) road. The same applies to a bump on the road, e.g., a speed bump. A deteriorated road surface may, e.g., comprise a local roughness that may lie above a predetermined threshold. In other words, a rough surface also exhibits a locally higher curvature than a regular (plane) road.

For example, the selecting may comprise selecting a portion of the initial image data from within a temporal range, preferably of 10 seconds or less, around the time of the determined collision with the road hazard, preferably at least partly before the collision.

This was shown to be a highly reliable approach ensuring that sufficient initial image data capturing the road hazard of interest are selected.

When said selecting is performed, the initial telematic data on which the selection may be based may be associated with at least a portion of the initial image data (e.g., an image and/or video of the road hazard captured by, e.g., a vehicle mounted camera, smartphone, etc.). There is no particular restriction on how said portion of the initial image data image is selected. A possibility may be that the time instant of impact/collision is reconstructed and the corresponding portion of the initial image data is selected/extracted from the initial image data. Another example may be that all the frames in a time interval corresponding to a fixed number of seconds (e.g., 10 seconds) before the collision are taken.

The method may, in some examples, further comprise labelling the selected training (image) data. The labelling may, e.g., comprise labelling a location and/or an absence of the road hazard in at least one of the training (image) data.

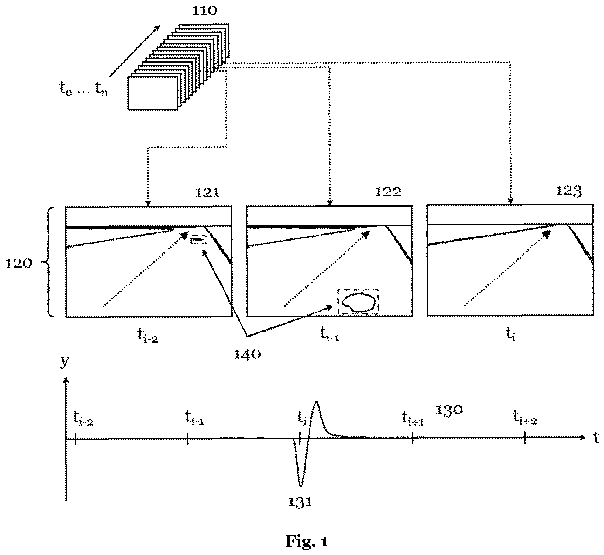

While, in some examples, the training data may be used without labelling, the efficiency of training could be improved by labelling. Such labelling is exemplarily described in reference to Fig. 1 in more detail. For example, the labelling may comprise assigning one or more labels to a road hazard. The label may, e.g., comprise a road hazard type (e.g., at least one of: pothole, crack, debris, water, ice, oil spill, roadkill, construction zone, fallen tree, traffic cone, bump, etc.), a road hazard severity (e.g., minor, moderate, severe, and/or any other suitable (e.g., numeric) grading of the road hazard severity with the same number or less or more grades), a road hazard position (e.g., relative to the road, a lane on the road, on a map, and/or comprising a (global) coordinate and/or a coordinate within the frame and/or image of the road hazard), a road hazard dimension (e.g., comprising one, two or more lateral dimensions, a lateral shape, a depth or height (e.g., perpendicular to the lateral dimension(s)), a depth-and-height profile (e.g., as a function of the lateral dimension(s))) and/or a road hazard constitution (e.g., comprising at least one of: a material constituting the road hazard, a rigidity).

In some examples, the labelling may be based at least partly on the initial telematic data.

Labelling the selected training (image) data based at least partly on the initial telematic data may increase the accuracy and reliability of the labelling which reproduces itself advantageously in as-trained neural networks, corresponding training methods and/or use of the trained neural network.

In one example, the telematic data may, e.g., indicate the severity of a collision with a road hazard and thus the severity of the road hazard itself. For example, a shallow pothole and a deep pothole may result in different spikes in the telematic data, e.g., a deviation of the wheel speed of a wheel colliding with said pothole from its previous wheel speed and/or from the wheel speed of the other wheels not colliding with said pothole. Thus, the telematic data-based labelling can result in a more accurate and reliable labelling of, e.g., the road hazard severity.

A second aspect of the present disclosure relates to a computer-implemented method for training a neural network for use in road analysis. The method comprises: inputting training data to the neural network to train the neural network; wherein the training data is provided by the steps of the computer-implemented method for providing training data for training a neural network for road analysis, e.g., as described herein.

Said training method may be executed faster and more efficiently as due to the increased quality of the training data described herein, less training data may be sufficient to achieve the desired training effect (e.g., a sufficiently well-trained neural network, e.g., as described herein).

A third aspect of the present disclosure comprises a neural network for use in road analysis, having been trained according to the computer-implemented method for training a neural network for use in road analysis, e.g., as described herein.

A neural network for use in road analysis, having been trained based on such training data may be more accurate and reliable. In detail, the training data as per the method for providing them described herein may weight those road hazards with an increased probability for colliding with them more heavily which are exactly those road hazards that the trained neural network must identify for a particularly reliable, accurate, and helpful operation. Further, this automized process may also allow identification of those road hazards to be integrated into the training data that might be overseen in other conventional approaches for selecting training data. E.g., when selecting and labeling initial image data manually (as well in other approaches), one may oversee minor road hazards (e.g., rough and/or dirty road surfaces). The resulting training data set may thus be only of lower quality, and neural networks trained thereon may not be capable of detecting corresponding minor road hazards.

Altogether, the association of initial image data and initial telematic data allows an as-trained neural network to detect road hazards in in-operando images of different severity levels (for example "mild", "relevant" or "severe") and/or classify them accordingly. Previous approaches are based only on the detection of road hazards without any classification of the severity which makes the solution less attractive for driving safety and hazard mapping due to the high risk of false positives (for example road cracks, small potholes, large potholes may all be detected in the same way). On the contrary, the present disclosure yields a solution for both locating the road hazard and determining the severity of the road hazard based on the potential harm to the vehicle and/or tires. This level of insight is enabled by the integration of vehicle telematics like, e.g., wheel speed and/or accelerations. When collecting initial image data on road hazards for training data, the present disclosure also collects/obtains the initial telematic data associated with the impact. These may be used for creating the severity label.

The neural network may, e.g., comprise a convolutional neural network (CNN), which was shown to yield a particularly optimized performance.

A fourth aspect of the present disclosure relates to a computer-implemented method for road analysis. The method comprises: obtaining in-operando image data of a surface of a road, wherein preferably the surface may be associated with the driving of a vehicle on the surface; and detecting, by use of a neural network, a road hazard based at least partly on the in-operando image data; wherein the neural network has been trained based on training data that were selected, based at least in part on initial telematic data obtained during a training phase of the neural network.

Said method may be more reliable and accurate (i.e., reducing both, false-negative and false-positive detections of road hazards) compared to previously known approaches, particularly regarding road hazards a driver (highly) likely collides with (e.g., potholes positioned on a road or a lane of a road such that one can hardly bypass them).

The in-operando image data may, e.g., be obtained, acquired, measured, provided, and/or received as described herein in reference to the initial image data. In more detail, the in-operando image data (and/or the initial image data) may be obtained by, e.g., one or more vehicle-mounted sensors external road cameras, drones and/or similar means.

There may be other embodiments in which the selection of the training data was not based on such initial telematic data.

In some examples, training the neural network may be based on the computer-implemented method for training a neural network for use in road analysis, e.g., as described herein.

In such methods, the advantages described herein in reference to the training data, the training based thereon, and the as-trained neural network reproduce themselves.

In some examples, the method may further comprise obtaining in-operando telematic data. It may, e.g., further comprise triggering the detecting based at least partly on the in-operando telematic data.

A fifth aspect of the present disclosure comprises a computer-implemented method for road analysis, the method comprising: obtaining in-operando telematic data; obtaining in-operando image data of a surface acquired during driving of a vehicle on the surface; detecting, by use of a trained neural network, a road hazard based at least partly on the in-operando image data; wherein preferably the detecting may comprise detecting a presence and/or a severity of the road hazard; and triggering the detecting based at least partly on the in-operando telematic data.

This may, e.g., make the detection of road hazards even more reliable. This may be particularly advantageous for a continuous monitoring/analysis of the road such that, e.g., new road hazards - and especially the most dangerous ones, i.e., the ones resulting in indications in the in-operando telematic data upon collisions. Typically, one is interested in precisely those road hazards while road hazards one hardly ever collides with (e.g., potholes at the outer edge of a road) are often of less interest.

For example, the triggering of the detecting based at least partly on the in-operando telematic data may comprise detecting a triggering event (e.g., a collision with a road hazard) in the in-operando telematic data. When at least one such triggering event is detected, the method may comprise analyzing the in-operando image data that are (e.g., temporally) associated with said triggering event/collision, e.g., by the trained neural network. In detail, said neural network may receive said associated in-operando image data as to screen them for detecting (e.g., as described herein) the road hazard that the vehicle has collided with.

In some examples, the triggering may be based at least partly on the in-operando telematic data indicating a collision with a road hazard.

As described herein, said indication of a collision may represent a triggering event (as, e.g., in the example above).

For example, the detected road hazard may comprise a location, preferably a GPS location, a location on the road, and/or a timestamp.

The location may allow any further processing of the detected road hazard, e.g., use for generating a map of road hazards as described herein. The timestamp may, e.g., when also the telematic data may comprise a timestamp, be used for associating the detected road hazard with corresponding image data and/or telematic data. Further, assigning such timestamp to a detected road hazard allows for a more comprehensive road monitoring. This may, e.g., be relevant for transitory road hazards like, e.g., ice, oil spills, dirt, etc.

In general, the detected road hazard may comprise any of the examples described herein as labels of a road hazard.

In some examples, the method may further comprise a synchronizing of the detected road hazard with at least one previously detected road hazard.

This may yield a more comprehensive and reliable collection of detected road hazards, reduce redundancy, i.e., rendering the method more efficient in terms of required storage. Equally, accessing the detected road hazards becomes more reliable and faster.

The synchronizing may, e.g., comprise checking if there is already a previously detected road hazard that corresponds to the same physical road hazard: E.g., when the same or different vehicles encounter the same road hazard twice, the method may provide only one entry in a database of detected road hazard (as there is only one physical road hazard corresponding to said two detections). The synchronizing may, e.g., comprise a comparing of the detected road hazard with at least one previously detected road hazard. When, e.g., one or more parameters of the detected road hazard (e.g., at least one described herein as a label) match.

In one example, a vehicle encounters a pothole. Said pothole may in this example be detected by the method described herein as a first detected road hazard. E.g., the first detected road hazard may comprise: [type = pothole, location = (x1, y1), timestamp = May 24, 2024 - 11:30 (CET), severity = minor]. Shortly later in time, in this example, a vehicle may encounter the same pothole and may detect it as a second detected road hazard. In this example the second detected road hazard may comprise: [type = pothole, location = (x2=x1+Δx1, y2=y1+Δx1), timestamp = May 26, 2024 - 17:15 (CET), severity = minor]. The synchronizing may comprise comparing, e.g., the type, location, and severity. As in this example, there is a match in type and severity, the location may be decisive for the synchronizing: As in this example, the vehicle collided with a slightly different part of the pothole, there is no exact match in the location. Generally, when Δx1 and Δy1 are below a predetermined threshold (e.g., 1 m), the first and second detected pothole may be seen as to correspond to the same physical pothole. In this case, the first and second detected pothole may be stored in a database as entries for the same road hazard, the first detected road hazard entry in such database may be replaced by a corresponding entry of the second detected road hazard, and/or the second detected road hazard may be discarded (as the entry of the first detected road hazards already accounts for the underlying physical road hazard). Otherwise (if Δx1 and/or Δy1 are above a predetermined threshold (e.g., 1 m) the second detected road hazard may be seen as to correspond to a different physical road hazard than the first detected road hazard - however, this is not the case in the present example. Further, in this exemplary scenario, a vehicle may encounter the same pothole at an even later point in time, at which the severity of the pothole has increased. Thus, it may detect it as a third detected road hazard. In this example, the third detected road hazard may comprise: [type = pothole, location = (x3, y3), timestamp = July 11, 2024 - 10:15 (CET), severity = moderate]. The synchronizing may comprise comparing, e.g., the type, location, and severity. While the location (x3, y3) may substantially match the locations (x1, y1) and (x2, y2), e.g., as described for the second detected road hazard, and the type matches as well, the mismatch in severity may be understood such that the entry for said pothole in the database may be updated accordingly such that the corresponding pothole is graded as moderately severe.

The method may, for example, further comprise generating a map of road hazards based at least partly on one or more detected road hazards.

Generating such map may advantageously allow a quick overview of the road status, e.g., in an environment of a user using/viewing said map. The map may, e.g., be presented to a user, e.g., when operating a vehicle, e.g., by means of at least one of: an on-board display, head-up-display, a mobile device, etc.

Such map may by, e.g., generated in consistency with the synchronization as described herein.

In some examples, the detected road hazard may comprise an elapse condition.

E.g., an elapse time may be based on global and/or local traffic parameters (these may, e.g., comprise a fleet size, a traffic frequency, and/or related measures and/or on the road hazard type (e.g., as described herein). For example, a dirty road may be assigned a short elapse time (as it may vanish by itself, e.g., after rain, and/or quickly), a pothole may be assigned a medium elapse time (as it may, e.g., be repaired), and/or a speed bump may be assigned a high elapse time (as it may be assumed that the speed bump had been installed on purpose and will not be removed on purpose any time soon).

For example, when a detected road hazard has been detected at time tₓ and is assigned with an elapse time tₑ, the detected road hazard may be deleted and/or highlighted as potentially not up-to-date until tₓ+tₑ, if the same road hazard has not been detected again.

The method may, in an exemplary embodiment, further comprise providing an alert based at least partly on the in-operando telematic data and/or at least on the detected road hazard.

For example, the in-operando telematic data may indicate the (GPS) location of a vehicle and a driving direction. Based thereon, it may be possible to reliably predict (e.g., by extrapolation and/or by considering a known course of the road ahead) the course, drive, and/or location of the vehicle for a certain time into the future. In the example of an active navigation system, the system may even be able to predict the location for long times in the future along the planned route. Based on this, the alert may, e.g., inform the driver of upcoming road hazards, e.g., when these are located in a database and/or map as described herein. The alert may, e.g., comprise a visual alert, an acoustic alert, a haptic alert, and/or a combination thereof.

In some examples, the initial telematic data and/or the in-operando telematic data may comprise at least one of: an acceleration, a vehicle speed, a vehicle coordinate, a wheel speed, a tire temperature, a tire pressure, an external temperature, a tire size, a tire specification, and/or a vehicle specification.

In a broader sense, the telematic data may, e.g., comprise, but is not limited to, the following types of data: vehicle location data (e.g., comprising a vehicle coordinate, a (real-time) GPS coordinate, historical route information, and/or geofencing data), speed data (e.g., comprising a (current and/or GPS) vehicle speed, a (current) wheel speed, a historical speed pattern, and/or speed limit compliance), vehicle diagnostic data (e.g., comprising a tire temperature, a tire pressure, onboard diagnostics data, engine status, error codes, and/or maintenance requirements), fuel consumption data (e.g., comprising fuel usage rates, efficiency metrics, and/or refueling events), acceleration and/or braking data (e.g., comprising instances of (sharp) acceleration and/or braking, acceleration, braking, and/or deceleration patterns), driver behavior data (e.g., comprising instances of speeding, harsh turning, and/or adherence to road signals), vehicle specification data (e.g., comprising, a tire size, a tire specification, a tire composition, a tire ID (number), and/or for the vehicle and/or the tire: a specification, a manufacturer, a weight, a size, a width, and/or a length), vehicle fault data (e.g., comprising detected mechanical issues, fault codes, and/or diagnostics reports), maintenance and/or servicing data (e.g., comprising scheduled and/or completed maintenance events, service history, and/or predictive maintenance alerts), telecommunication data (e.g., comprising data transmission logs, network connectivity status, and/or communication latency metrics), environmental data (e.g., comprising weather conditions, an external temperature, road conditions, and/or traffic conditions), payload data (e.g., comprising cargo weight, load distribution, and/or trailer/container tracking information), safety data (e.g., comprising collision detection, near-miss incidents, and/or emergency event data), and/or user interaction data (e.g., comprising driver inputs, system usage logs, and/or user interface interaction metrics).

This telematic data may be collected, transmitted, stored, analyzed, and utilized by vehicle telematics systems to enhance vehicle performance, ensure regulatory compliance, improve driver safety, and optimize operational efficiency. Features described herein in reference to "telematic data" may relate to the "initial telematic data" and/or to the "in-operando telematic data".

A minimum set of requirements for efficient and reliable training may relate to the initial telemetry data comprising the vehicle speed along with the acceleration and/or wheel speed.

### 4. Short description of the figures

Fig. 1 illustrates an exemplary selection of a portion of initial image data as training data, based at least partly on initial telematic data.
Fig. 2 shows an exemplary map generated by an exemplary method for road analysis.
Fig. 3 shows an exemplary trained neural network for use in road analysis, having been trained according to a method as described herein.
Fig. 4 shows an exemplary vehicle.
Fig. 5 shows a flowchart of the methods described herein.

### 5. Detailed description

Fig. 1 illustrates an exemplary selection of a portion 121, 122, 123 of initial image data 110 as training data 120, based at least partly on initial telematic data 130.

In detail, the initial image data 110 of the example in Fig. 1 comprise a plurality of n+1 frames in a time range from tₒ to tₙ. Two subsequent frames are therein separated in time by Δt=(tₙ-tₒ)/n. For example, the n frames may be a video sequence from tₒ to tₙ.

The exemplary initial telematic data 130 comprise a measure y, in the example of Fig. 1, e.g., the tire load (i.e., the force acting on the tire), shown on the bottom of Fig. 1 as a function of time t around a time tᵢ from tᵢ₋₂ to tᵢ₊₂., wherein each increment in i corresponds to a different frame of the initial image data 110. The initial telematic data 130 average for times around tᵢ at a predetermined value. At tᵢ, however, the vehicle collides with a pothole: In this example, the tire load of the example of Fig. 1 experiences a drop, e.g., when the tire drops into a pothole followed by a subsequent increase above the average value, e.g., caused by the tire after dropping into the pothole hits the rear portion of the pothole. From this anomaly in the telematic data, it can be derived that the vehicle (and in detail the respective tire) has collided with a road hazard at around time tᵢ.

Based thereon, an exemplary method may comprise selecting at least a portion 121, 122, 123 of the initial image data 110 as the training data 120. In the example of Fig. 1, the frame 123 at t; and the two previous frames, namely frame 122 at tᵢ₋₁ and frame 121 at tᵢ₋₂ are selected. In the example of Fig. 1, the image data is acquired by a camera facing the direction of driving (illustrated by the dashed arrow in the frames 121, 122, and 123). Therefore, frame 121 shows an image of the road the vehicle is driving along with the road hazard 140 in the distance. In the later frame 122 the road hazard 140 is closer to the vehicle and thus larger in the image. Lastly in frame 123, corresponding approximately to the moment of collision, the road hazard 140 is already under the vehicle and thus not visible in the image.

The selected initial image data/the selected frames may, e.g., be labelled by marking a location and/or dimension of the road hazard, as e.g., illustrated by the dashed rectangular shape in frames 121 and 122.

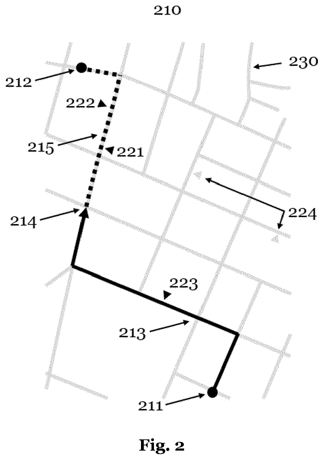

Fig. 2 shows an exemplary map 210 generated by an exemplary method for road analysis.

The exemplary map 210 shows a road network 230 in a surrounding of a current location 214 of a vehicle while driving from starting point 211 to a destination 212. The drive from the starting point 211 to the destination 212, may, e.g., be guided by a navigation system and/or shown as illustrated in Fig. 2: Therein, the exemplary route comprises a first portion 213 being the route that the vehicle has already driven along and a second portion 215 being the route that the vehicle is supposed (e.g., instructed by the navigation system) to drive along to reach the destination 212. The map comprises a plurality of detected road hazards 221, 222, 223, 224 illustrated by triangles pointing towards a location of the respective detected road hazard 221, 222, 223, 224. The tip of the triangle illustrating said detected road hazards 221, 222, 223, 224 points to the side of the road on which said detected road hazard 221, 222, 223, 224 is located.

In the example of Fig. 2, detected road hazard 221 is on the planned route of the vehicle at location 214. Thus, an alert may be triggered as described herein. Road hazard 222 is on the opposite lane (leading in the opposite direction). Thus, in some examples, no alert may be triggered based thereon. Road hazard 223 is already passed by the vehicle on its drive. Thus, in some examples, no alert may be triggered based thereon. Road hazards 224 are not on the planned route. Thus, in some examples, no alert may be triggered based thereon.

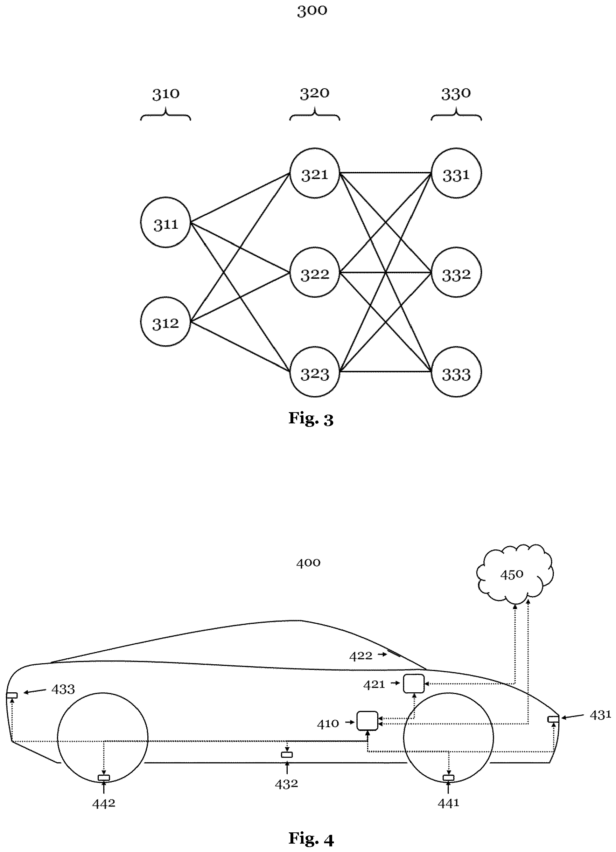

Fig. 3 shows an exemplary trained neural network 300 for use in road analysis, having been trained according to a method as described herein. The exemplary neural network 300 comprises an input layer 310 comprising a plurality of nodes 321, 322, 323, a hidden layer 320 and an output layer 330.

The input layer 310 comprises two nodes 311, 312, e.g., corresponding to the inputs being in-operando telematic data and in-operando image data. Generally, the input to the neural network can, e.g., be any of the image frames described herein (e.g., single frames and/or multiple frames from video capture).

Task to be solved by neural network may, e.g., be object (road hazard) detection which may, e.g., involve one or more CNN layers, one or more ResNet skip connections and/or one or more dense layers. Other architectures might also leverage on, e.g., attention layers.

The output layer 330 comprises three nodes 331, 332, 333, e.g., corresponding to the detected road hazard in terms of location, type, and severity.

Fig. 4 shows an exemplary vehicle 400 comprising an on-board-computer 410, an on-board display, a head-up display 422, one or more front cameras 431, one or more side camera 432, one or more rear camera 433, one or more tire-mounted sensors 441, 442. Other exemplary vehicles 400 may comprise only some of these means and/or additional means (not shown). The remote server may comprise one or more (remote) server(s).

As shown in Fig. 4, the on-board-computer 410 and the on-board display 421 may be able to connect (e.g., wirelessly) to a remote server 450, e.g., a cloud-based server. Any of the steps of the method descried herein may be executed by the on-board-computer 410, the on-board display 421, the server 450, combinations thereof, and/or other means.

The one or more cameras 431, 432, 433 may comprise an image sensor (e.g., CCD or CMOS (complementary metal oxide semiconductor) sensor) having an array of individually addressable sensing elements for capturing images of a sample, and optics (e.g., one or more lenses, mirrors or reflecting surfaces, filters, and/or image stops). In some implementations, the on-board-computer 410, the on-board display 421, the server 450, combinations thereof, and/or other means can include a data processor and a storage device. Such data processor (located anywhere) can be configured to execute the steps of the methods described herein, e.g., by using the trained neural network as described herein. The storage device(s) can store the initial telematic data, the initial image data, the training data, the neural network, the in-operando telematic data, and/or the in-operando image data. In some implementations, the vehicle and/or the remote server(s) 450 can include one or more computers that include one or more data processors configured to execute one or more programs that include a plurality of instructions according to the principles described above. Each data processor can include one or more processor cores, and each processor core can include logic circuitry for processing data. For example, a data processor can include an arithmetic and logic unit (ALU), a control unit, and various registers. Each data processor can include cache memory. Each data processor can include a system-on-chip (SoC) that includes multiple processor cores, random access memory, graphics processing units, one or more controllers, and one or more communication modules. Each data processor can include millions or billions of transistors.

The processing of data described in this document, such as, e.g., the selecting of training data and/or the detecting of a road hazard, can be carried out using one or more computers, which can include one or more data processors for processing data, one or more storage devices for storing data, and/or one or more computer programs including instructions that when executed by the one or more computers cause the one or more computers to carry out the processes. The one or more computers can include one or more input devices, such as a keyboard, a mouse, a touchpad, and/or a voice command input module, and one or more output devices, such as a display, and/or an audio speaker.

In some implementations, the one or more computing devices can include digital electronic circuitry, computer hardware, firmware, software, or any combination of the above. The features related to processing of data can be implemented in a computer program product tangibly embodied in an information carrier, e.g., in a machine-readable storage device, for execution by a programmable processor; and method steps can be performed by a programmable processor executing a program of instructions to perform functions of the described implementations. Alternatively or in addition, the program instructions can be encoded on a propagated signal that is an artificially generated signal, e.g., a machine-generated electrical, optical, or electromagnetic signal, that is generated to encode information for transmission to suitable receiver apparatus for execution by a programmable processor.

A computer program can be written in any form of programming language, including compiled or interpreted languages, and it can be deployed in any form, including as a stand-alone program or as a module, component, subroutine, or other unit suitable for use in a computing environment.

For example, the one or more computers can be configured to be suitable for the execution of a computer program and can include, by way of example, both general and special purpose microprocessors, and any one or more processors of any kind of digital computer. Generally, a processor will receive instructions and data from a read-only storage area or a random access storage area or both. Elements of a computer system include one or more processors for executing instructions and one or more storage area devices for storing instructions and data. Generally, a computer system will also include, or be operatively coupled to receive data from, or transfer data to, or both, one or more machine-readable storage media, such as hard drives, magnetic disks, solid state drives, magneto-optical disks, or optical disks. Machine-readable storage media suitable for embodying computer program instructions and data include various forms of non-volatile storage area, including by way of example, semiconductor storage devices, e.g., EPROM, EEPROM, flash storage devices, and solid state drives; magnetic disks, e.g., internal hard disks or removable disks; magneto-optical disks; and CD-ROM, DVD-ROM, and/or Blu-ray discs.

In some implementations, the processes described above can be implemented using software for execution on one or more mobile computing devices, one or more local computing devices, and/or one or more remote computing devices (which can be, e.g., cloud computing devices). For instance, the software forms procedures in one or more computer programs that execute on one or more programmed or programmable computer systems, either in the mobile computing devices, local computing devices, or remote computing systems (which may be of various architectures such as distributed, client/server, grid, or cloud), each including at least one processor, at least one data storage system (including volatile and non-volatile memory and/or storage elements), at least one wired or wireless input device or port, and at least one wired or wireless output device or port.

In some implementations, the software may be provided on a medium, such as CD-ROM, DVD-ROM, Blu-ray disc, a solid state drive, or a hard drive, readable by a general or special purpose programmable computer or delivered (encoded in a propagated signal) over a network to the computer where it is executed. The functions can be performed on a special purpose computer, or using special-purpose hardware, such as coprocessors. The software can be implemented in a distributed manner in which different parts of the computation specified by the software are performed by different computers. Each such computer program is preferably stored on or downloaded to a storage media or device (e.g., solid state memory or media, or magnetic or optical media) readable by a general or special purpose programmable computer, for configuring and operating the computer when the storage media or device is read by the computer system to perform the procedures described herein. The inventive system can also be considered to be implemented as a computer-readable storage medium, configured with a computer program, where the storage medium so configured causes a computer system to operate in a specific and predefined manner to perform the functions described herein.

The initial and/or in-operando telematic data described herein may, e.g., be obtained, measure, and/or acquired by: a GPS sensor, an accelerometer, a gyroscope, a fuel level sensor, an engine control unit sensor, a tire pressure monitoring sensor (TPMS), a tire temperature sensor, a camera (e.g., the same camera as used for obtaining the image data and/or a different one), a radar sensor, a lidar sensor, an ultrasonic sensor, a temperature sensor, a humidity sensor, a proximity sensor, a load sensor, a speed sensor, a wheel speed sensor, a microphone, a break pressure sensor, a steering angle sensor, a battery voltage sensor, and/or a combination thereof. Any of these examples may be vehicle-mounted and/or remote from the vehicle (e.g., stationary near a road). Any of these exemplary means may comprise, e.g., a data processor, a storage device, a data transmission means (e.g., wire-based and/or wireless), and/or a data receiving means (e.g., wire-based and/or wireless).

In the example of Fig. 4, the on-board-computer 410 may control (as shown in Fig. 4 by the dashed arrows) the camera(s) 431, 432, 433 and sensor(s) 441, 442. The camera(s) 431, 432, 433 may, e.g., be configured to acquire the initial and/or in-operando image data, and the sensor(s) 441, 442 may, e.g., be configured to acquire the initial and/or in-operando telematic data. These may, e.g., be provided to the on-board-computer 410 (as shown in Fig. 4 by the dashed arrows) and/or by any other means described herein, e.g., by the sensor(s) 441, 442 and/or camera(s) 431, 432, 433 themselves, the remote server 450, and/or other means.

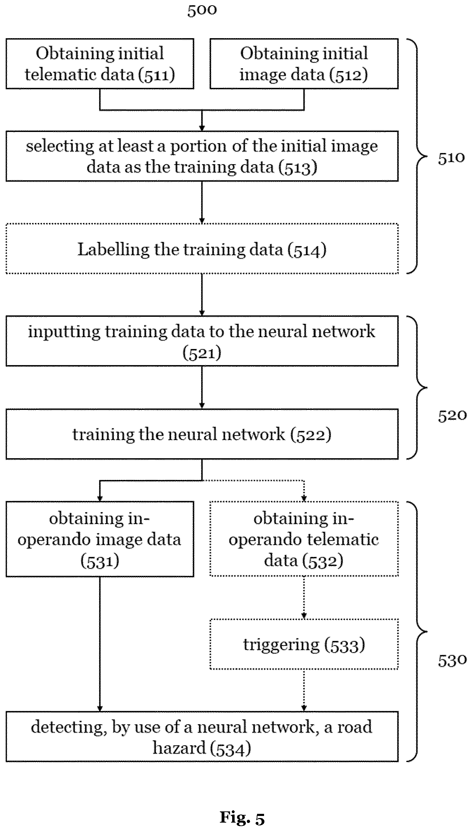

Any of the data and/or information described herein (e.g., the map of detected road hazards may, e.g., be shown to a user operating the vehicle 400 by means of the on-board-computer 410, the on-board display 421, the head-up display 422, a mobile device (e.g., a smart watch and/or a mobile phone; not shown) and/or other means. Fig. 5 shows a flowchart 500 of the methods 510, 520, 530 described herein. It shows the computer-implemented method for providing training data for training a neural network for road analysis 510, followed by the computer-implemented method for training a neural network for use in road analysis 520 using the training data provided by method 510, and the computer-implemented method for road analysis 530 using the neural network trained by method 520.

The computer-implemented method for providing training data for training a neural network for road analysis 510 comprises the obtaining of the initial telematic data 511, e.g., as described herein, and the obtaining of initial image data 512, e.g., as described herein. Steps 511 and 512 may be, e.g., performed in parallel. The method 510 further comprises selecting at least a portion of the initial image data as the training data 513. This is, as described herein, based at least partly on the initial telematic data obtained in step 512. Optionally (as indicated by the dotted step 514), the method 510 may further comprise labelling the training data 514, e.g., as described herein.

The training data (labelled or not) may then be used to train a neural network for use in road analysis, e.g., in the computer-implemented method for training a neural network for use in road analysis 520. The method 520 comprises inputting training data to the neural network 521 and then training the neural network 522. This may provide a trained neural network as described herein.

The computer-implemented method for road analysis 530 may use said neural network trained by method 520. Method 530 comprises obtaining in-operando image data 531, and may, in some embodiments, further comprise obtaining in-operando telematic data 532. If such in-operando telematic data are obtained, the method may further comprise a step of triggering 533 the detecting 534 based at least partly on the in-operando telematic data. The method 530 comprises detecting, by use of the neural network, a road hazard 534.

The embodiments of the present disclosure that are described in this specification and the optional features and properties respectively mentioned in this regard should also be understood to be disclosed in all combinations with one another. In particular, in the present case, the description of a feature comprised by an embodiment - unless explicitly explained to the contrary - should also not be understood such that the feature is essential or indispensable for the function of the embodiment.

### 6. Embodiments

The present disclosure comprises the following embodiments:
1. A computer-implemented method for providing training data for training a neural network for road analysis, the method comprising:
   obtaining initial telematic data associated with a drive of a vehicle on a surface; obtaining initial image data of the surface, wherein obtaining the initial image data is associated with the drive of the vehicle; and
   selecting at least a portion of the initial image data as the training data, based at least partly on the initial telematic data.
2. The method of embodiment 1, wherein the initial image data comprises a plurality of image frames; wherein preferably the training data comprise at least one of the plurality of image frames.
3. The method of embodiment 1 or 2, further comprising determining a collision with a road hazard based at least partly on the initial telematic data, wherein preferably the road hazard comprises a deviation from a plane road surface; and wherein selecting is based at least partly on the determining of the collision.
4. The method of embodiment 3, wherein the selecting comprises selecting a portion of the initial image data from within a temporal range, preferably of 10s or less, around the time of the determined collision with the road hazard, preferably at least partly before the collision.
5. The method of any of embodiments 1-4, further comprising labelling the selected training data, wherein the labelling comprises labelling a location and/or an absence of the road hazard in at least one of the training data.
6. The method of embodiment 5, wherein the labelling is based at least partly on the initial telematic data.
7. A computer-implemented method for training a neural network for use in road analysis, the method comprising:
   inputting training data to the neural network to train the neural network;
   wherein the training data is provided by the steps of the method according to any of embodiments 1-6.
8. A neural network for use in road analysis, having been trained according to the method of embodiment 7.
9. A computer-implemented method for road analysis, the method comprising:
   obtaining in-operando image data of a surface of a road, wherein preferably the surface is associated with a drive of a vehicle on the surface; and
   detecting, by use of a neural network, a road hazard based at least partly on the in-operando image data;
   wherein the neural network has been trained based on training data that were selected, based at least in part on initial telematic data obtained during a training phase of the neural network.
10. The method of embodiment 9, wherein training the neural network was based on the computer-implemented method of embodiment 7.
11. The method of embodiment 9 or 10, further comprising obtaining in-operando telematic data; and
   triggering the detecting based at least partly on the in-operando telematic data.
12. A computer-implemented method for road analysis, the method comprising:
   obtaining in-operando telematic data;
   obtaining in-operando image data of a surface acquired during a drive of a vehicle on the surface;
   detecting, by use of a trained neural network, a road hazard based at least partly on the in-operando image data;
   wherein preferably the detecting comprises detecting a presence and/or a severity of the road hazard; and
   triggering the detecting based at least partly on the in-operando telematic data.
13. The method of embodiment 11 or 12, wherein the triggering is based at least partly on the in-operando telematic data indicating a collision with a road hazard.
14. The method of any of embodiments 9-13, wherein the presence of the road hazard comprises a GPS location, a location on the road, and/or a timestamp.
15. The method of any of embodiments 9-14 further comprising a synchronizing of the detected road hazard with at least one previously detected road hazard.
16. The method of any of embodiments 9-15, further comprising generating a map of road hazards based at least partly on one or more detected road hazard.
17. The method of any of embodiments 9-16, wherein the detected road hazard comprises an elapse condition of the road hazard.
18. The method of any of embodiments 9-17, further comprising providing an alert based at least partly on the in-operando telematic data and/or at least on determined classifier.
19. The method of any of the previous embodiments, wherein the initial telematic data and/or the in-operando telematic data comprise at least one of: an acceleration, a vehicle speed, a vehicle coordinate, a wheel speed, a tire temperature, a tire pressure, an external temperature, a tire size, a tire specification, and/or a vehicle specification.

## Claims

1. A computer-implemented method for providing training data for training a neural network for road analysis, the method comprising:
obtaining initial telematic data associated with a drive of a vehicle on a surface;
obtaining initial image data of the surface, wherein obtaining the initial image data is associated with the drive of the vehicle; and
selecting at least a portion of the initial image data as the training data, based at least partly on the initial telematic data.

2. The method of claim 1, wherein the initial image data comprises a plurality of image frames; wherein preferably the training data comprise at least one of the plurality of image frames.

3. The method of claim 1 or 2, further comprising determining a collision with a road hazard based at least partly on the initial telematic data, wherein preferably the road hazard comprises a deviation from a plane road surface; and wherein selecting is based at least partly on the determining of the collision.

4. The method of claim 3, wherein the selecting comprises selecting a portion of the initial image data from within a temporal range, preferably of 10s or less, around the time of the determined collision with the road hazard, preferably at least partly before the collision.

5. The method of any of claims 1-4, further comprising labelling the selected training data, wherein the labelling comprises labelling a location and/or an absence of the road hazard in at least one of the training data.

6. The method of claim 5, wherein the labelling is based at least partly on the initial telematic data.

7. A computer-implemented method for training a neural network for use in road analysis, the method comprising:
inputting training data to the neural network to train the neural network;
wherein the training data is provided by the steps of the method according to any of claims 1-6.

8. A neural network for use in road analysis, having been trained according to the method of claim 7.

9. A computer-implemented method for road analysis, the method comprising:
obtaining in-operando image data of a surface of a road; and
detecting, by use of a neural network, a road hazard based at least partly on the in-operando image data;
wherein the neural network has been trained based on training data that were selected, based at least in part on initial telematic data obtained during a training phase of the neural network.

10. The method of claim 9, wherein training the neural network was based on the computer-implemented method of claim 7.

11. The method of claim 9 or 10, further comprising obtaining in-operando telematic data; and
triggering the detecting based at least partly on the in-operando telematic data.

12. A computer-implemented method for road analysis, the method comprising:
obtaining in-operando telematic data;
obtaining in-operando image data of a surface acquired during a drive of a vehicle on the surface;
detecting, by use of a trained neural network, a road hazard based at least partly on the in-operando image data; and
triggering the detecting based at least partly on the in-operando telematic data.

13. The method of claim 11 or 12, wherein the triggering is based at least partly on the in-operando telematic data indicating a collision with a road hazard.

14. The method of any of claims 9-13, wherein the detected road hazard comprises a GPS location, a location on the road, and/or a timestamp.

15. The method of any of the previous claims, wherein the initial telematic data and/or the in-operando telematic data comprise at least one of: an acceleration, a vehicle speed, a vehicle coordinate, a wheel speed, a tire temperature, a tire pressure, an external temperature, a tire size, a tire specification, and/or a vehicle specification.
